**Europäisches Patentamt**

**European Patent Office**

**Office européen des brevets**

(19)

(11) Numéro de publication : **0 323 358 B1**

# FASCICULE DE BREVET EUROPEEN

(12)

(45) Date de publication du fascicule du brevet :
01.07.92 Bulletin 92/27

(51) Int. Cl.⁵ : **B23K 20/16**

(21) Numéro de dépôt : **88403359.8**

(22) Date de dépôt : **29.12.88**

(54) **Dispositif pour la fixation de deux éléments à l'aide d'un joint intercalaire écrasé sous forte pression.**

(30) Priorité : **30.12.87 FR 8718349**

(43) Date de publication de la demande :
**05.07.89 Bulletin 89/27**

(45) Mention de la délivrance du brevet :
**01.07.92 Bulletin 92/27**

(84) Etats contractants désignés :
**BE DE ES GB IT**

(56) Documents cités :
**EP-A- 0 153 232**
**GB-A- 2 041 635**
**GB-A- 2 061 155**
**US-A- 3 203 083**
**US-A- 4 270 691**

(73) Titulaire : **SEXTANT AVIONIQUE S.A.**
**Immeuble le Galilée Parc Tertiaire de Meudon**
**5/7 rue Jeanne Braconnier**
**F-92366 Meudon la Forêt Cédex (FR)**

(72) Inventeur : **Poussard, Bernard**
**14, rue des Rochereaux**
**F-86140 Migne Auxances (FR)**

(74) Mandataire : **Marquer, Francis et al**
**Cabinet Moutard 35, Avenue Victor Hugo**
**F-78960 Voisins le Bretonneux (FR)**

## Description

La présente invention concerne un dispositif pour la fixation de deux éléments à l'aide d'un joint intercalaire, les deux éléments et le joint intercalaire étant portés à haute température puis, le joint intercalaire étant écrasé sous forte pression.

Elle concerne plus particulièrement un dispositif pour la fixation du type de celui décrit dans le brevet US-A-4 270 291, dans lequel la zone de fixation d'au moins l'un des éléments avec le joint est préalablement recouverte d'une couche en matériau de même nature que le joint.

Elle s'applique notamment mais non exclusivement à la fixation d'électrodes et de pièces de fermeture sur des lasers à gaz et en particulier sur des gyromètres à laser ou gyrolasers fonctionnant en tube scellé.

D'une manière générale, on sait que les lasers à gaz et les gyrolasers comprennent le plus souvent une enveloppe en matériau isolant contenant du gaz, des éléments optiques et au moins deux électrodes, à savoir : une anode, entre lesquelles on peut faire passer un courant électrique pour réaliser une inversion de population dans le gaz contenu dans l'enveloppe. Ils comportent fréquemment des orifices accessoires obturés par des pièces de fermeture.

La réalisation et la fixation de ces électrodes et de ces pièces de fermeture sur l'enveloppe isolante posent de nombreux problèmes, aussi bien pour l'étanchéité que pour les contraintes mécaniques qu'elles apportent à l'enveloppe et donc pour la tenue mécanique, la tenue en température et la tenue dans le temps.

Les constructeurs de lasers à gaz et de gyrolasers ont apporté de nombreuses solutions pour réaliser leurs électrodes et leurs pièces de fermeture, mais ces solutions présentent toutes des inconvénients.

A cet égard, les gyrolasers posent des problèmes plus difficiles à résoudre que ceux rencontrés sur les autres types de lasers à gaz. C'est pourquoi l'exposé et la description de l'invention qui vont suivre se rapporteront principalement aux gyrolasers, bien que les solutions proposées s'appliquent évidemment à tous lasers à gaz et également à toutes liaisons entre plusieurs matériaux demandant de bonnes qualités d'étanchéité et de tenue mécanique ou en température.

Les électrodes et les pièces de fermeture des gyrolasers, suivant l'art antérieur, comportent le plus souvent une collerette circulaire, fixée sur le matériau qui constitue l'enveloppe desdits gyrolasers, par un joint d'étanchéité rapporté. Le matériau constituant l'enveloppe est généralement une céramique partiellement vitrifiée du type "zérodur", et le joint d'étanchéité est généralement en indium ou en alliage d'indium. Il peut aussi être en aluminium, ainsi que le décrit la demande de brevet EP-A2-0153232 de la Société Quantel.

Le joint d'indium peut être écrasé, soit à froid, soit à chaud, ou brasé pour l'opération de fixation sur le bloc optique. Le joint d'aluminium est généralement écrasé ou compressé après un chauffage préalable à une température voisine de celle de son point de fusion.

Les électrodes et les pièces de fermeture fixées par des joints à base d'indium présentent l'inconvénient de ne pas supporter de température élevée et limitent, par conséquent, le domaine d'emploi des gyrolasers qui les utilisent.

L'utilisation de joints à base d'aluminium nécessite des précautions opératoires importantes pour éviter, pendant le chauffage préalable, l'oxydation de la partie du métal de l'électrode qui sera en contact avec le joint d'aluminium. Une telle oxydation nuit à l'étanchéité et à la tenue du joint. Il faut, pour l'éviter, faire l'opération sous vide ou sous atmosphère réductrice, ce qui est très coûteux pour des opérations généralement pratiquées unitairement.

Dans ce type d'application, l'invention a pour but de réaliser des électrodes de gyrolaser, cathodes et anodes, ainsi que des pièces de fermeture, qui supportent des fonctionnements en température élevée, et peuvent être fixées sur les blocs optiques très rapidement sans nécessiter d'environnement spécifique pendant l'opération de fixation.

L'invention concerne d'une façon plus générale un dispositif pour la fixation de deux éléments à l'aide d'un joint intercalaire écrasé sous forte pression entre ces deux éléments, la zone de fixation d'au moins l'un desdits éléments avec ledit joint étant préalablement recouverte d'une couche en un matériau de même nature que le joint.

Selon l'invention, ce dispositif est caractérisé en ce que :

– le susdit joint et la susdite couche sont en aluminium, et,

– le joint présente une forme torique de manière à ce que, lors de sa compression, il déchire et chasse vers les bords extérieurs et intérieurs, la fine couche d'alumine qui recouvre la couche d'aluminium et qu'en conséquence, en fin de compression, is ne reste plus dans la zone de fixation que de l'aluminium pur.

– la haute température est proche de la température de fusion de l'aluminium.

Des modes de réalisation de l'invention seront décrits ci-après, à titre d'exemples, avec référence aux dessins annexés dans lesquels :

La figure 1 est une vue de dessus d'un gyrolaser auquel peut s'appliquer l'invention ;

La figure 2 est une vue en coupe d'une anode selon l'art antérieur ;

La figure 3 est une vue en coupe d'une cathode selon l'art antérieur ;

La figure 4 est une vue en coupe d'une anode selon l'invention, avant fixation sur un bloc optique ;

La figure 5 est une vue en coupe de l'anode de la figure 4, après fixation sur un bloc optique ;

La figure 6 est une vue en coupe d'une cathode selon l'invention, avant fixation sur un bloc optique ;

La figure 7 est une vue en coupe de la cathode de la figure 6, après fixation sur un bloc optique ;

Les figures 8 et 9 sont des vues en coupe d'un second mode de réalisation de l'anode selon l'invention, avant et après fixation sur un bloc optique ;

Les figures 10 et 11 sont des vues en coupe d'une variante de réalisation de l'anode selon l'invention, avant et après fixation sur un bloc optique ;

Les figures 12 et 13 sont des vues en coupe d'une anode selon l'invention réalisant une fonction de "queusot", avant et après fixation ;

Les figures 14 et 15 sont des vues en coupe d'un second mode de réalisation d'une cathode selon l'invention, avant et après fixation ;

Les figures 16 et 17 sont des vues en coupe d'un troisième mode de réalisation d'une cathode selon l'invention, avant et après fixation ; et

La figure 18 est une vue en coupe du procédé de chauffage pour la fixation des électrodes selon l'invention.

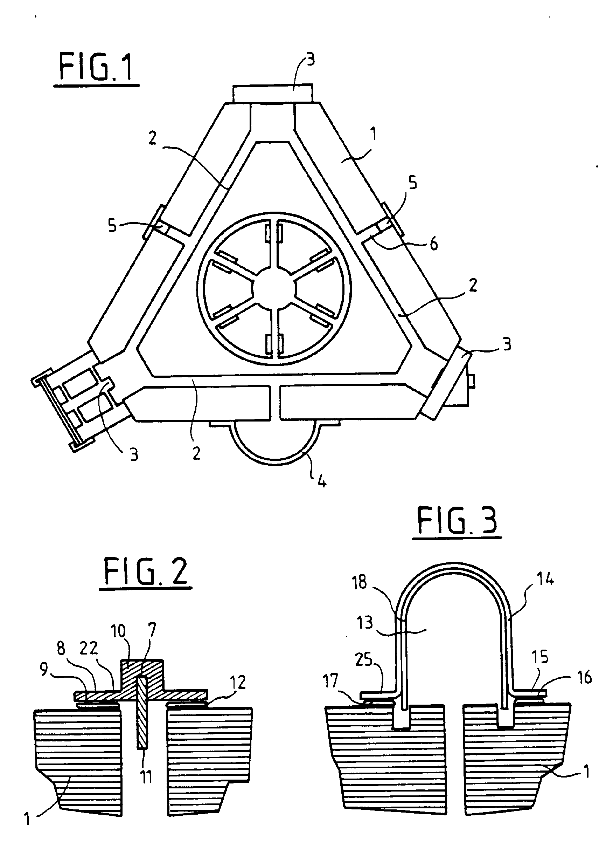

Comme précédemment mentionné, et ainsi que le montre la figure 1, un gyrolaser, dont le principe de fonctionnement est maintenant bien connu, comporte notamment :

– un bloc optique 1, réalisé dans un matériau isolant et étanche à l'hélium, généralement une céramique vitrifiée du genre "zérodur", dans lequel sont percés des conduits 2, fermés par des éléments optiques 3 qui forment, avec lesdits conduits 2, un parcours optique, triangulaire dans le cas de la figure 1, mais qui peut prendre toute autre forme, un même bloc optique pouvant comporter plusieurs parcours optiques ;

– une ou deux cathodes 4 fixées sur le bloc optique 1 ;

– une ou deux anodes 5 également fixées sur le bloc optique 1.

Ces cathodes et anodes constituent les électrodes du gyrolaser et sont reliées aux conduits 2 par des conduits de raccordement 6.

Le bloc optique 1 est rempli d'un mélange gazeux généralement à base d'hélium et de néon. Un courant électrique passant entre les électrodes excite ce mélange gazeux et crée un plasma dans les conduits de raccordement 6 et dans les conduits 2, plasma qui, en amplifiant la lumière, génère l'effet laser.

Compte tenu du fonctionnement en tube scellé, on conçoit aisément que la fixation des électrodes sur le bloc optique doive se faire avec une très bonne étanchéité.

Ainsi que le montre la figure 2, une anode 7 selon l'art antérieur est généralement constituée d'un disque plan ou collerette 8, en matériau conducteur, dont une face 9 sert à la fixation sur le bloc optique, et dont l'autre face 22 sert à appliquer une pression. Selon ce mode d'exécution ce disque comprend une portion cylindrique 10 et une pièce 11, généralement en forme de tige, constituant la partie active de l'électrode, réalisée en matériau conducteur, par exemple en tungstène.

Cette anode est fixée sur le bloc optique 1, à un endroit où a été percé un conduit de raccordement 6, par un joint 12 en matériau tel que l'aluminium, compressé à une température proche de celle de la fusion dudit matériau, joint placé entre la face 9 de la collerette 8 et le bloc optique 1.

La figure 3 illustre la constitution d'une cathode 13 selon l'art antérieur, réalisée à partir d'une enveloppe 14 en matériau conducteur, de forme généralement cylindro-sphérique et munie d'une collerette 15, dont une face 16 sert à la fixation sur le bloc optique 1, à l'aide également d'un joint 17 compressé à chaud, et dont l'autre face 25 sert à appliquer une pression.

Une pièce 18, également cylindro-sphérique, généralement en aluminium, constitue la partie émissive de cette cathode et est fixée, emmanchée à force par exemple, à l'intérieur de l'enveloppe 14.

Lors du chauffage précédant la fixation par compression, les surfaces des faces 9 et 16 des collerettes 8 et 15 des anodes 7 et des cathodes 13, ci-dessus décrites, risquent de s'oxyder, ainsi que cela a été dit plus haut, si l'opération n'est pas réalisée sous vide ou sous atmosphère réductrice.

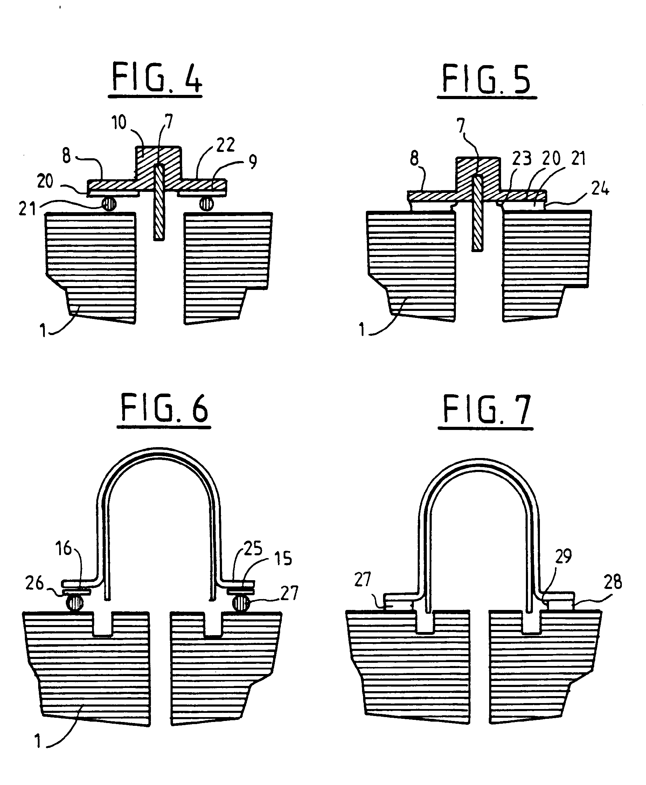

Ainsi que le montre la figure 4, une anode réalisée selon l'invention peut être constituée de la même manière que précédemment, mais la face 9 de la collerette 8 est protégée par une couche 20 d'un matériau inoxydable ou dont l'oxyde, si ce matériau est oxydable, peut se combiner favorablement au matériau constituant le joint, ou sera chassé au moment de la compression.

Ce matériau est préférentiellement de l'aluminium. Dans ce cas, pendant le chauffage précédant la fixation, il apparaîtra une fine couche d'alumine.

Ainsi décrites, les anodes selon l'invention sont fixées sur les blocs optiques en suivant un mode opératoire adéquat, par exemple :

Pour la préparation de l'opération, les pièces sont disposées en place comme le montre la figure 4. Un joint 21, par exemple torique et en aluminium, est placé sur le bloc optique 1. L'anode 7, qui a reçu la couche d'aluminium 20, est posée sur le joint 21, et l'ensemble est chauffé à une température proche de celle de la fusion de l'aluminium.

Une forte pression est appliquée sur la face extérieure 22 de la collerette 8 et le joint 21, presque mou, est écrasé ainsi que le montre la figure 5. La couche d'aluminium 20, disposée sur la face 9 de la collerette 8, est également presque molle, et la fine couche d'alumine qui la recouvre est facilement déchirée et chassée vers les bords intérieurs 23 et extérieurs 24 de ladite couche d'aluminium 20, sous l'effet de l'écrasement du joint 21. Il ne reste plus, entre le matériau du bloc optique 1 et la collerette 8, que de l'aluminium pur dont l'étanchéité est parfaite.

La figure 6 montre une cathode selon l'invention, avant l'opération de thermo-compression. Sa constitution est analogue à celle de la cathode de la figure 3, mais une couche 26, préférentiellement d'aluminium, a été déposée préalablement sur la face 16 de la collerette 15 de ladite cathode. Un joint 27, également en aluminium, est posé sur le bloc optique 1 et la cathode est placée sur le joint. Comme pour l'anode, l'ensemble est chauffé à une température voisine de celle de la fusion de l'aluminium, et une forte pression est appliquée sur la face externe 25 de la collerette 15.

Ainsi que le montre la figure 7, le joint 27 est écrasé, comme dans le cas de l'anode, et l'alumine est également chassée vers les bords 28 et 29 de la couche d'aluminium.

Pour certaines opérations, nécessitant un grand domaine de température de fonctionnement, il peut être intéressant de remplacer le matériau constituant le disque d'anode ou l'enveloppe de cathode, par le même matériau que celui utilisé pour le bloc optique, généralement du zérodur dans le cas du gyrolaser, et ceci, pour éviter des contraintes importantes dans ledit matériau, contraintes dues aux différences de coefficient de dilatation entre les matériaux des différentes pièces.

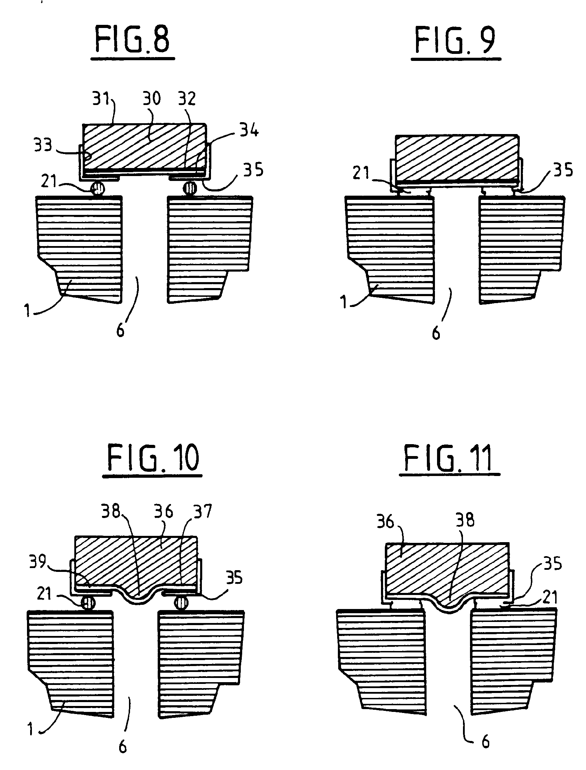

La figure 8 montre une anode selon l'invention ainsi réalisée. Cette anode comprend :
– un substrat 30 usiné dans le même matériau que celui du bloc optique 1, du zérodur par exemple, et dont la forme peut être celle d'un disque, dont une face 31 sert à appliquer la pression pour l'opération de fixation, dont l'autre face 32 et la partie cylindrique extérieure 33 recevront des dépôts métalliques ;
– une couche 34 d'un matériau conducteur, du tungstène par exemple, déposé sur la face 32 et qui constituera la partie anode proprement dite ;
– une couche 35 de protection, de préférence en aluminium, déposée en couronne sur la couche 34 et débordant sur la paroi cylindrique extérieure 33 du substrat 30 ; et
– un joint 21.

Pour l'opération de fixation de cette anode, sur le bloc optique 1, le processus peut être le même que précédemment. La figure 9 montre cette anode fixée sur ledit bloc optique 1 avec son joint écrasé et ne faisant plus qu'un avec le matériau de la couche 35. Ladite couche 35, du fait qu'elle déborde sur la paroi cylindrique du substrat, permet de faire un raccordement électrique entre l'extérieur du bloc optique 1 et la partie émissive 34 de l'anode située devant le conduit 6 dudit bloc optique 1.

La figure 10 illustre une variante de réalisation de l'anode de la figure 9. Elle comporte :
– un substrat 36 ayant une face de fixation 37 munie d'une excroissance 38, sensiblement au centre de ladite face 37, excroissance dont la forme et la hauteur peuvent être très diverses ;
– une couche 39 d'un matériau, du tungstène par exemple, qui constituera la partie anode proprement dite ;
– une couche 35, préférentiellement d'aluminium, déposée en couronne, comme précédemment, sur la couche 39 ; et
– un joint 21.

L'excroissance 38 est destinée à éviter que le plasma, créé entre les électrodes, dans le bloc optique, ne touche le matériau du joint 21 et la couche de protection 35.

La figure 11 montre cette anode fixée sur le bloc optique 1. Du fait de l'excroissance 38, la couche de tungstène 39 rentre à l'intérieur du conduit 6, et évite ainsi au plasma de toucher le joint 21 et la couche de protection 35.

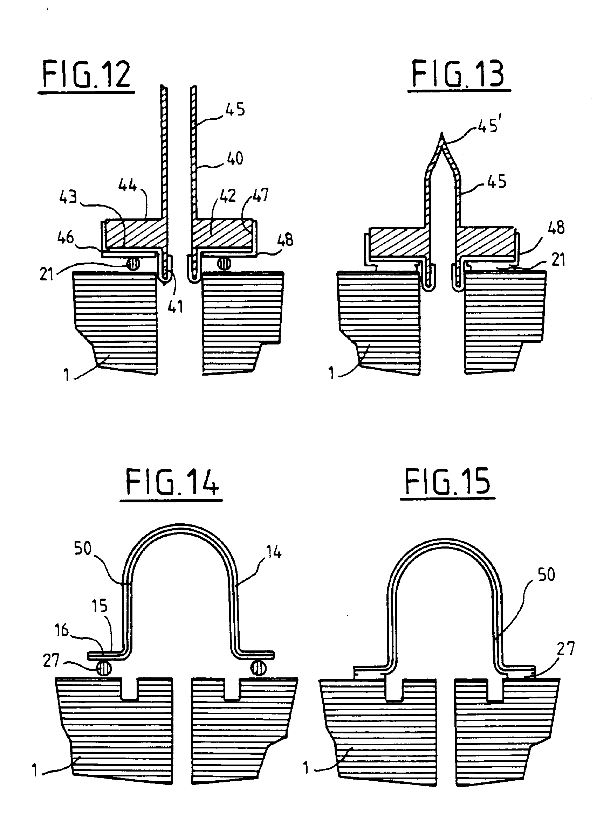

La figure 12 montre une anode selon l'invention réalisant une fonction "queusot".

Cette anode comprend :
– un tube 40 en matériau conducteur ou isolant, muni près de l'une de ses extrémités 41, d'une collerette 42 ayant un pourtour 47 et deux faces 43 et 44, sensiblement planes, destinées à recevoir, l'une, 43, des dépôts métalliques, et l'autre, 44, la pression pour la fixation, ladite extrémité 41 étant arrondie, l'autre extrémité 45 du tube 40 servant au remplissage du gyrolaser et pouvant être fermée, par pincement, par fusion ou par tout autre moyen pour sceller, ou "queusoter", le gyrolaser ;
– une couche 46 d'un matériau conducteur, du tungstène par exemple, qui constituera la partie active de l'anode et qui recouvrira l'extrémité 41 du tube 40, intérieur et extérieur, et également de préférence la face 43 de la collerette 42 ;
– une couche 48, de préférence en aluminium, déposée en couronne sur la partie de la couche 46 recouvrant la face 43 de la collerette 42 et avantageusement sur le pourtour 47 de ladite collerette 42, surtout si celle-ci est réalisée en matériau isolant ; et
– un joint 21, préférentiellement en aluminium.

La figure 13 montre l'anode de la figure 12 fixée au bloc optique 1, et dont l'extrémité 45 a été fermée par un pincement 45'.

Comme pour les anodes précédentes, le joint a été écrasé et ne fait plus qu'un avec le matériau de la couche 48.

La partie de la couche 46 déposée sur l'extrémité 41 du tube 40 assure la fonction d'anode et la liaison électrique est assurée vers l'extérieur par la couche 48 si la collerette 42 est en matériau isolant.

La figure 14 illustre un second mode de réalisation de la cathode selon l'invention, dans lequel celle-ci comprend, comme pour le premier mode, une enveloppe extérieure 14. La surface intérieure de cette enveloppe est recouverte d'une couche d'un matériau émissif 50, préférentiellement en aluminium, qui forme la partie émissive de ladite cathode, dépôt qui s'étend jusqu'à la face 16 de la collerette 15 et qui vient la recouvrir.

La figure 15 montre cette cathode fixée sur le bloc optique 1 par un joint 27 écrasé et ne faisant qu'un avec la couche 50.

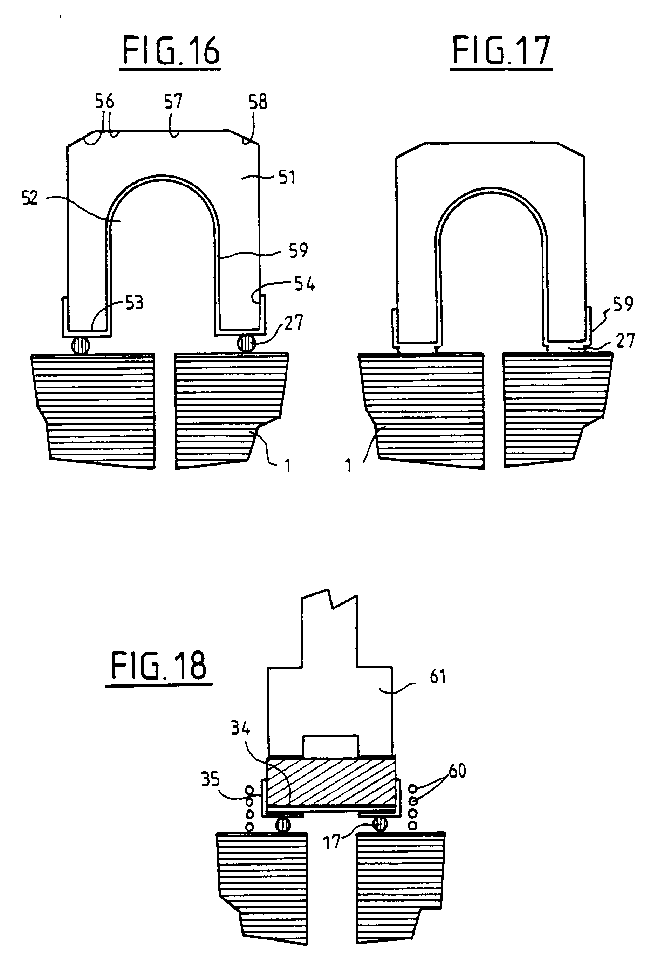

La figure 16 illustre un troisième mode de réalisation d'une cathode selon l'invention.

Cette cathode comprend :

– une enveloppe 51 en matériau isolant, de préférence en "zérodur", de façon à réduire les contraintes mécaniques et qui comporte elle-même :
– une partie intérieure 52, creuse, de forme préférentiellement cylindro-sphérique, ouverte vers l'extérieur par la partie cylindrique ;
– une surface 53, destinée à la fixation de la cathode sur le bloc optique 1, de préférence plane et en forme de couronne, entourant l'ouverture de la partie intérieure 52 ;
– une surface extérieure 54 de préférence cylindrique ; et
– une surface d'appui 56, destinée à recevoir la pression pour la fixation, surface 56 qui peut être plane ou combiner différents types de surfaces tels qu'un plan 57, un cône 58, éventuellement une sphère ou toute autre surface, de sorte que l'encombrement soit minimisé et que les forces de pression soient convenablement transmises à la surface 53 ;
– une couche de matériau conducteur 59, de préférence en aluminium, déposée sur les surfaces 52 et 53 et sur tout ou partie de la surface extérieure 54, pour former la partie émissive de la cathode à l'intérieur de l'enveloppe 51 et une partie liaison électrique sur la surface extérieure 54 de ladite enveloppe ; et
– un joint 27 également de préférence en aluminium.

La figure 17 représente la cathode de la figure 16 fixée sur le bloc optique 1 avec le joint 27 écrasé entre ledit bloc optique 1 et la couche d'aluminium 59.

La figure 18 illustre le procédé adopté pour effectuer l'opération de fixation des électrodes sur le bloc optique 1 et notamment pour le chauffage préalable des pièces métalliques. Sur cette figure 18, le procédé est appliqué, à titre d'exemple, à une anode du type de celle présentée par la figure 8.

Le chauffage s'effectue par un rayonnement haute fréquence créé par un bobinage 60 placé autour de l'outil de pression de l'électrode à fixer, de sorte que le champ haute fréquence chauffe l'outil de pression qui entoure les électrodes.

Le réglage du courant haute fréquence, de la position du bobinage 60 par rapport au bloc optique 1 et de la longueur dudit bobinage 60, permet d'optimiser le temps de chauffage et la répartition des températures entre les pièces.

Une pièce 61 vient appliquer la pression sur l'électrode pour écraser le joint.

On conçoit aisément, sans qu'il soit besoin de le représenter, qu'il est extrêmement simple de réaliser des pièces de fermeture selon l'invention, en utilisant un substrat tel que ceux des anodes de la figure 8, et en lui appliquant une couche préférentiellement en aluminium avant de le fixer sur le bloc optique à l'aide d'un joint, lui aussi préférentiellement en aluminium.

**Revendications**

1. Dispositif pour la fixation de deux éléments (1,8) à l'aide d'un joint (21) intercalaire, les deux éléments (1,8) et le joint intercalaire (21) étant portés à haute température puis, le joint intercalaire étant écrasé sous forte pression entre ces deux éléments (1,8), la zone de fixation d'au moins l'un desdits éléments avec ledit joint (21) étant préalablement recouverte d'une couche (20) en matériau de même nature que celui du joint (21), caractérisé en ce que :

– le susdit joint et la susdite couche sont en aluminium, et
– le joint présente une forme torique de manière à ce que, lors de sa compression, il déchire et chasse vers les bords extérieurs (23) et intérieurs (24), la fine couche d'alumine qui recouvre la couche d'aluminium et qu'en conséquence, en fin de compression, il ne reste plus dans la zone de fixation que de l'aluminium pur.
– la haute température est proche de la température de fusion de l'aluminium.

2. Dispositif selon la revendication 1, caractérisé en ce que l'un desdits éléments (1) est réalisé en un matériau non conducteur et en ce que l'autre élément (7, 13) assure une traversée électrique dans ce matériau non conducteur.

3. Dispositif selon l'une des revendications précédentes, caractérisé en ce que l'un des susdits éléments est le bloc optique (1) d'un gyromètre à laser et l'autre élément consiste en une électrode (7,13).

4. Dispositif selon la revendication 3, caractérisé en ce que la susdite électrode consiste en une anode (7) comprenant un substrat présentant une face de fixation (9, 32, 37), ce substrat étant réalisé en un matériau à coefficient de dilatation voisin de celui du susdit bloc optique.

5 Dispositif selon la revendication 4, caractérisé en ce que ledit substrat présente la forme d'un disque cylindrique (30) éventuellement muni d'une excroissance (38) formée sur ladite face de fixation (37).

6. Dispositif selon l'une des revendications 4 ou 5, caractérisé en ce que la susdite face de fixation (32, 37) est recouverte d'une couche primaire (34, 39) réalisée en un matériau conducteur et sur laquelle est déposée en couronne une couche de protection (35) débordant sur la surface cylindrique du substrat (30, 36).

7. Dispositif selon la revendication 4, caractérisé en ce que la susdite anode comprend :
– un tube (40), muni, près de l'une de ses extrémités (41) d'une collerette (42) ayant un pourtour (47) et deux faces opposées (43,44) ;
– une couche primaire (46) réalisée en un matériau conducteur recouvrant l'extrémité (41) du tube (40) et, de préférence, la face (43) de la collerette (42), et
– une couche de protection (48) déposée en couronne sur la face (43) de la collerette (42) et sur son pourtour (47).

8. Dispositif selon l'une des revendications 6 ou 7, caractérisé en ce que la susdite couche primaire (34, 39) est réalisée en tungstène et la couche de protection (35) est réalisée en aluminium.

9. Dispositif selon la revendication 3, caractérisé en ce que la susdite électrode consiste en une cathode.

10. Dispositif selon la revendication 3, caractérisé en ce que la susdite électrode consiste en une cathode comprenant :
– une enveloppe creuse (14) ;
– une collerette (15) solidaire de ladite enveloppe (14) et dont une face 16 constitue la face de fixation ;
– une couche de matériau émissif (50), déposée à l'intérieur de l'enveloppe et débordant sur ladite face de fixation (16), et
– une couche de protection, déposée sur la couche (50) et recouvrant au moins partiellement la face de fixation (16).

11. Dispositif selon la revendication 3, caractérisé en ce que la susdite électrode consiste en une cathode comprenant :
– un corps creux (51), en un matériau isolant dont le coefficient de dilatation est sensiblement identique à celui de la pièce sur laquelle il est fixé, ce corps présentant d'un côté une ouverture bordée par une face de fixation (53) ;
– une couche de matériau émissif (59), déposée à l'intérieur de l'enveloppe et débordant sur ladite face de fixation (53) et
– une couche de protection déposée sur la couche de matériau émissif (59) et recouvrant au moins partiellement la face de fixation (53).

12. Dispositif selon la revendication 11, caractérisé en ce que le matériau formant ledit corps est en vitrocéramique.

13. Dispositif selon l'une des revendication 10 à 12, caractérisé en ce que la couche en matériau émissif (50, 59) est en aluminium.

14. Dispositif selon l'une des revendications 10 à 13, caractérisé en ce que la couche de protection est en aluminium.

15. Dispositif selon la revendication 1, caractérisé en ce que l'un des susdits éléments consiste en le bloc optique (1) d'un gyromètre laser, tandis que l'autre élément consiste en une pièce de fermeture.

## Claims

1. Device for attaching two elements (1, 8) with an inserted seal (21) crushed under great pressure after the two elements (1, 8) and the inserted seal (21) have been raised to a high temperature, the area in which at least one of said elements is attached to said seal (21) being covered beforehand with a layer (20) of material of the same kind as that of the seal (21), in which device:
– said seal and said layer are of aluminium,
– the seal is in the shape of a toroid so that when it is compressed it detaches and expels towards the outside edge (23) and the inside edge (24) the thin layer of alumina which covers the layer of aluminium so that on completion of such compression there remains only pure aluminium in the attachment area, and
– the high temperature is near the melting point of aluminium.

2. Device according to claim 1 characterised in that one of said elements (1) is made from a non- conductive material and the other element (7, 13) provides an electrical connection through said non- conductive material.

3. Device according to claim 1 or claim 2 characterised in that one of said elements is the optical assembly (1) of a laser gyro and the other element is an electrode (7, 13).

4. Device according to claim 3 characterised in that said electrode is an anode (7) comprising a substrate having an attachment surface (9, 32, 37) and made from a material whose coefficient of thermal expansion is similar to that of the material of said optical assembly.

5. Device according to claim 4 characterised in that said substrate is in the form of a cylindrical disc (30) optionally provided with a protuberance (38) on said attachment surface (37).

6. Device according to claim 4 or claim 5 characterised in that said attachment surface (32, 37) is covered with a primary layer (34, 39) of a conductive material onto which is deposited an annular layer (35) of protective material extending onto the cylindrical surface of the substrate (30, 36).

7. Device according to claim 4 characterised in that said anode comprises:
   – a tube (40) having near one end (41) a flange (42) having an edge (47) and two opposite sides (43, 44),
   – a primary layer (46) of conductive material covering the end (41) of the tube (40) and preferably the surface (43) of the flange (42), and
   – an annular protective layer (48) deposited on the surface (43) and on the edge (47) of the flange (42).

8. Device according to claim 6 or claim 7 characterised in that said primary layer (34, 39) is of tungsten and the protective layer (35) is of aluminium.

9. Device according to claim 3 characterised in that said electrode is a cathode.

10. Device according to claim 3 characterised in that said electrode is a cathode comprising:
   – a hollow enclosure (14),
   – a flange (15) fastened to said enclosure (14) and one side (16) of which constitutes the attachment surface;
   – a layer (50) of emissive material deposited on the inside of the enclosure and extending onto said attachment surface (16), and
   – a protective layer deposited onto the layer (50) and covering at least partially the attachment surface (16).

11. Device according to claim 3 characterised in that said electrode is a cathode comprising:
   – an insulative material hollow body (51) whose coefficient of thermal expansion is substantially identical to that of the part to which it is attached, said body having on one side an opening flanked by an attachment surface (53),
   – a layer (59) of emissive material deposited on the inside of the enclosure and extending onto said attachment surface (53), and
   – a protective layer deposited onto the emissive material layer (59) and covering at least partially the attachment surface (53).

12. Device according to claim 11 characterised in that the material of said body is a vitrified ceramic.

13. Device according to any one of claims 10 to 12 characterised in that the emissive material layer (50, 59) is of aluminium.

14. Device according to any one of claims 10 to 13 characterised in that the protective layer is of aluminium.

15. Device according to claim 1 characterised in that one of said elements is the optical assembly (1) of a laser gyrometer and the other element is a closure part.

**Patentansprüche**

Vorrichtung zum Befestigen von zwei Bauteilen (1 8) mittels einer eingeschobenen Dichtung (21), wobei die beiden Bauteile und die zwischengeschobene Dichtung (21) auf eine hohe Temperatur erhitzt werden und die Dichtung dann unter grossem Druck zusammengepresst zwischen diese beiden Teile (1 8) geschoben wird und der Befestigungsbereich mindestens eines der besagten Teile mit besagter Dichtung (21) vorher mit einer Schicht (20) aus Material der gleichen Natur wie das der Dichtung (21) überzogen wird,
dadurch gekennzeichnet dass :
   – besagte Dichtung und besagte Schicht aus Aluminium sind und
   – die Dichtung eine torische Form hat, sodass sie, wenn sie gequetscht wird, die feine Aluminiumoxidschicht, welche die Aluminiumschicht bedeckt zerreisst und an die äusseren (23) und inneren (24) Ränder treibt und am Ende des Pressens in der Befestigungszone nur noch reines Aluminium verbleibt,
   – die hohe Temperatur nahe der Schmelztemperatur des Aluminiums liegt.

2. Vorrichtung nach Anspruch 1, dadurch gekennzeichnet, dass eines der besagten Teile (1) aus einem nichtleitenden Material hergestellt ist und das andere Teil (7, 13) den elektrischen Durchfluss durch besagtes nichtleitendes Material ermöglicht.

3. Vorrichtung nach einem der vorhergehenden Ansprüche, dadurch gekennzeichnet, dass eines der besagten Teile die optische Einheit (10) eines Lasergyrometers ist und das andere aus einer Elektrode (7, 13) besteht.

4. Vorrichtung nach Anspruch 3, dadurch gekennzeichnet, dass besagte Elektrode aus einer Anode (7) besteht, mit einem Substrat, welches eine Befestigungsfläche (9, 32, 37) aufweist und dieses Substrat aus einem Material gefertigt ist, dessen Dehnungskoeffizient dem der besagten optischen Einheit angenähert ist.

5. Vorrichtung nach Anspruch 4, dadurch gekennzeichnet, dass besagtes Substrat die Form einer zylindrischen Scheibe (30) hat, die eventuell auf der Befestigungsfläche (37) mit einer Protuberanz (38) versehen ist.

6. Vorrichtung nach einem der Ansprüche 4 oder 5,

dadurch gekennzeichnet, dass besagte Befestigungsfläche (32, 37) mit einer Primärschicht (34, 39) aus leitendem Material versehen ist, auf der kranzförmig eine bis auf die zylindrische Fläche des Substrats (30, 36) reichende Schutzschicht (35) aufgebracht ist.

7. Vorrichtung nach Anspruch 4,

dadurch gekennzeichnet, dass besagte Anode aufweist :

– eine Röhre (40), die in der Nähe eines ihrer Enden (41) mit einem Flansch (42) versehen ist, der einen äusseren Umfang (47) und zwei gegenüberliegende Flächen (43, 44) aufweist,

– eine Primärschicht (46) aus einem leitenden Material, welche das Ende (41) der Röhre (40) und vorzugsweise die Fläche (43) des Flansches (42) bedeckt und

– eine kranzförmig auf die Fläche (43) des Flansches (42) und dessen Umfang (47) aufgebrachte Schutzschicht (48).

8. Vorrichtung nach einem der Ansprüche 6 oder 7,

dadurch gekennzeichnet, dass besagte Primärschicht (34, 39) aus Wolfram ist und die Schutzschicht (35) aus Aluminium.

9. Vorrichtung nach Anspruch 3,

dadurch gekennzeichnet, dass besagte Elektrode aus einer Kathode besteht.

10. Vorrichtung nach Anspruch 3,

dadurch gekennzeichnet, dass besagte Elektrode aus einer Kathode besteht, die aufweist :

– ein hohles Gehäuse (14),

– einen mit besagtem Gehäuse (14) verbundenen Flansch (15), dessen eine Seite (16) die Befestigungsfläche bildet,

– eine Schicht aus emittirendem Material (50), die innen auf das Gehäuse aufgebracht ist und sich bis auf besagte Befestigungsfläche ( 16 ) erstreckt und

– eine auf die Schicht (50) aufgebrachte Schutzschicht, die, zumindest teilweise, die Befestigungsfläche (16) bedeckt.

11. Vorrichtung nach Anspruch 3,

dadurch gekennzeichnet, dass besagte Elektrode aus einer Kathode besteht, die aufweist :

– einen Hohlkörper (51) aus Isoliermaterial, dessen Ausdehnungskoeffizient im wesentlichen gleich dem des Teils ist, auf dem er befestigt ist und dieser Körper auf der einen Seite eine von einer Befestigungsfläche (53) begrenzte Öffnung aufweist,

– eine Schicht aus emittierendem Material (59), die im Inneren des Gehäuses angebracht ist und bis auf besagte Befestigungsfläche (33) reicht und

– eine auf die Schicht aus emittierendem Material (59) aufgebrachte Schutzschicht, die zumindestens teilweise die Befestigungsfläche (53) bedeckt.

12. Vorrichtung nach Anspruch 11,

dadurch gekennzeichnet, dass das Material des besagten Körpers ein Glaskeramikmaterial ist.

13. Vorrichtung nach einem der Ansprüche 10 bis 12,

dadurch gekennzeichnet, dass die Schicht aus emittierendem Material (50, 59) aus Aluminium ist.

14. Vorrichtung nach einem der Ansprüche 10 bis 13,

dadurch gekennzeichnet, dass die Schutzschicht aus Aluminium ist.

15. Vorrichtung nach Anspruch 1,

dadurch gekennzeichnet, dass eines der besagten Bauteile aus der optischen Einheit (1) eines Lasergyrometers besteht und das andere Bauteil aus einem Verschlussteil.

FIG.1

FIG.2

FIG.3

## FIG. 4

## FIG. 5

## FIG. 6

## FIG. 7

## FIG.8

## FIG. 9

## FIG. 10

## FIG. 11

EP 0 323 358 B1

FIG.12

FIG.13

FIG.14

FIG.15

12

## FIG.16

## FIG.17

## FIG.18